(19) Europäisches Patentamt
European Patent Office
Office européen des brevets

(11) Veröffentlichungsnummer: **0 000 127**
**B1**

(12) **EUROPÄISCHE PATENTSCHRIFT**

(45) Veröffentlichungstag der Patentschrift: **20.10.82**

(51) Int. Cl.³: **A 01 N 57/12,** A 01 N 47/10, C 07 F 9/141, C 07 F 9/165

(21) Anmeldenummer: **78100117.7**

(22) Anmeldetag: **08.06.78**

(54) **Insektizide und akarizide Mischungen, deren Herstellung und Verwendung.**

(30) Priorität: **18.06.77 DE 2727479**

(43) Veröffentlichungstag der Anmeldung: **10.01.79 Patentblatt 79/1**

(45) Bekanntmachung des Hinweises auf die Patenterteilung: **20.10.82 Patentblatt 82/42**

(84) Benannte Vertragsstaaten: **BE CH DE FR GB NL SE**

(56) Entgegenhaltungen:
**FR-A-2 166 172**
**FR-A-2 217 346**
**US-A-3 513 233**
**US-A-3 860 711**
**US-A-3 862 999**
**US-A-3 885 031**
**US-A-3 917 476**
**US-A-4 028 438**
**US-H-869 008**

(73) Patentinhaber: **BAYER AG, Zentralbereich Patente, Marken und Lizenzen, D-5090 Leverkusen 1, Bayerwerk (DE)**

(72) Erfinder: **Arend, Günter, Dr., Wiedstrasse 8, D-4047 Dormagen (DE)**
Erfinder: **Behrenz, Wolfgang, Dr., Untergruendemich 14, D-5063 Overath (DE)**
Erfinder: **Block, Hans-Dieter, Dr., Roggendorfstrasse 65, D-5000 Köln 80 (DE)**

**EP 0 000 127 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Insektizide und akarizide Mittel

Die vorliegende Erfindung betrifft neue insektizide und akarizide synergistische Wirkstoffkombinationen aus teilweise bekannten phosphorhaltigen Verbindungen und pestiziden Wirkstoffen.

Es ist bereits bekannt geworden, dass die folgenden Wirkstoffe bzw. Wirkstoffgruppen pestizide, insbesondere insektizide und akarizide Eigenschaften aufweisen:

Carbamate, wie z.B. das 2-iso-Prophyl-phenyl-N-methyl-carbamat, 2-(1-Methyl-allyl)-phenyl-N-Methyl-carbamat, 3-iso-Propyl-4-methoxy-phenyl-N-methyl-carbamat, 2-[1,3-Dioxolan(2)yl-phenyl]-N-methyl-carbamat, 2,2-Dimethyl-1,3-benzodioxol(4)yl-N-methyl-carbamat, 2,2-Dimethyl- bzw. 2-Methyl-2,3-dihydrobenzofuran(4)yl-N-methyl-carbamat und 2,3-Dihydro-2,2-dimethylbenzofuran( )yl-N-acetyl-N-methylcarbamat, 3,4,5-Trimethyl-phenyl-N-methylcarbamat, 1-Naphthyl-N-methyl-carbamat.

Weiterhin sind synergistische Mischungen von Carbamaten, z.B. 2-iso-Propoxyphenyl-N-methylcarbamat oder von Phosphorsäureestern, z.B. O,O-Diäthyl-O-(2-isopropyl-4-methyl-pyrimidinyl-[6]-phosphorthioat, oder von natürlichen oder synthetischen Pyrethroiden mit Piperonyläthern, wie z.B. α-[2-(2-Butoxyäthoxy)-äthoxy]-4,5-methylendioxy-2-propyl-toluol, bekannt (vgl. Bull, Org. -Health Org. 1966, 35, Seiten 691–708, Schrader G.: Die Entwicklung neuer insektizider Phosphorsäureester 1963, S. 158; Perkov, W.: Die Insektizide, 1966, Seiten 516–524). Die Wirksamkeit dieser Synergisten ist nicht befriedigend, eine gewisse Bedeutung hat nur das α-[2-(2-Butoxy-äthoxy)äthoxy]-4,5-methylendioxy-2-propyl-toluol (Piperonylbutoxyd) erlangt. Im übrigen sind die bekannten Synergisten nur aufwendig und teuer herstellbar, wodurch ihre Einsatzmöglichkeiten beschränkt werden. Das Auffinden von leicht zugänglichen und preiswerten Synergisten ist somit wünschenswert.

Es wurde nun gefunden, dass Wirkstoff-Synergist-Kombinationen aus ungesättigten organischen Phosphaten der allgemeinen Formel I

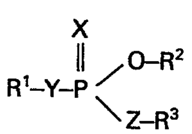
(I)

in welcher

$R^1$, $R^2$ und $R^3$ unabhängig voneinander für die Reste Alkyl, Alkenyl, welche gegebenenfalls durch Halogen oder Alkoxyreste substituiert sein können, oder Propargyl stehen, wobei mindestens einer der Reste für einen in 2-Stellung ungesättigten gegebenenfalls substituierten Alkenylrest oder für einen Propargylrest steht,

X für Sauerstoff oder Schwefel steht

Y und Z unabhängig voneinander für Sauerstoff und Schwefel stehen und Carbamaten im Gewichtsverhältnis zwischen 0,1:10 und 10:0,1 eine besonders hohe insektizide und akarizide Wirkung aufweisen. Die synergistische Wirkung der Verbindungen der allgemeinen Formel (I) zeigt sich bevorzugt bei den Carbamaten der allgemeinen Formel (II)

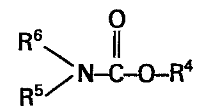

in welcher

$R^4$ für Aryl, Heterocyclus oder einen Oximrest steht,

$R^5$ für Wasserstoff oder Alkyl mit 1 bis 4 C-Atomen steht und

$R^6$ für Alkyl, Alkylcarbonyl mit 1–6 C-Atomen im Alkylrest, der gegebenenfalls auch durch Hydroxy oder Methylthio substituiert sein kann, oder den Rest -S-W, steht, wobei für einen gegebenenfalls durch Halogen substituierten aliphatischen Rest mit 1 bis 4 C-Atomen, insbesondere $CCl_3$ und $CF_3$, sowie für gegebenenfalls bevorzugt durch CN, Halogen, insbesondere Chlor, Methyl, Trihalogenmethyl, Trifluormethylmercapto oder $NO_2$ substituierten Arylrest, insbesondere Phenyl, oder für Methoxycarbonyl oder für den Rest $V\text{-}SO_2\text{-}N\text{-}R^5$ steht, wobei V für Alkyl, Halogenalkyl oder Halogen, Trihalogenmethyl, CN, Methyl oder Nitro substituierten Arylrest steht.

Besonders bevorzugt sind Carbamate, in denen

$R^4$ für Phenyl oder Naphthyl steht, die gegebenenfalls substituiert sind durch Alkyl, Alkenyl, Alkoxy, Alkylmercapto mit jeweils 1 bis 5 C-Atomen, Dialkylamino, Dialkenylamino bis zu 3 C-Atomen je Alkyl- bzw. Alkenylteil, Halogen, insbesondere Chlor, Dioxolanyl oder den Rest $-N=CH-N\ (C_{1-4}\text{-Alkyl})_2$;

weiterhin sind besonders bevorzugt Carbamate, in denen

$R^4$ für 2,3-Dihydrobenzofuranyl, Benzodioxol, Benzothienyl, Pyrimidyl oder Pyrazolyl steht, die gegebenenfalls durch $C_{1-4}$-Alkyl, insbesondere Methyl oder Dialkylamino mit 1 bis 4 C-Atomen je Alkylteil substituiert sind.

Weiterhin sind besonders bevorzugt Carbamate, in denen $R^4$ für einen Oximrest der allgemeinen Formel (II a)

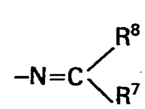
(IIa)

steht, in welcher

$R^7$ und $R^8$ gleich oder verschieden sind und für Alkyl, Cycloalkyl, Alkenyl, Alkinyl, Alkoxy, Alkylmercapto, Alkoxycarbonyl, Carbonylamid, Alkylmercaptoalkyl mit jeweils bis zu 5 C-Atomen, CN,

Aryl, insbesondere Phenyl, Aralkyl, einen gegebenenfalls substituierten heterocyclischen Rest oder für Alkyl, das durch einen heterocyclischen Rest substituiert ist, stehen oder gemeinsam für einen gegebenenfalls durch $C_{1-4}$-Alkyl substituierten Dioxolanyl oder Dithiolanylrest stehen.

Überraschenderweise ist die insektizide und/oder akarizide Wirkung der erfindungsgemässen Wirkstoffkombinationen wesentlich höher als die Wirkung der Einzelkomponente bzw. die Summe der Wirkungen der Einzelkomponenten. Sie ist ferner wesentlich höher als die Wirkung der bereits bekannten Wirkstoffkombinationen aus 2-iso-Propoxy-phenyl-N-methyl-carbamat und Piperonylbutoxyd.

Somit stellen synergistische Mischungen, die die erfindungsgemäss verwendbaren ungesättigten organischen Phosphate der Formel I enthalten, eine wertvolle Bereicherung der Technik dar.

Die ungesättigten organischen Phosphate der Formel I sind grösstenteils bekannt und nach üblichen Verfahren zugänglich. Zu den erfindungsgemäss verwendbaren ungesättigten organischen Phosphaten der allgemeinen Formel I gehören Phosphorsäureester, Thiophosphorsäureester, Dithio- und Trithiophosphorsäureester. Die Herstellung von (Thio-)Phosphorsäureestern ist beispielsweise ausführlich in «Houben-Weyl, Methoden der organischen Chemie, Bd. 12/1 bzw. Bd. 12/2» beschrieben.

Bevorzugt als Synergisten werden ungesättigte organische Phosphate der allgemeinen Formel I verwendet, in denen

$R^1$ für Alkyl mit 1 bis 4 C-Atomen, und Alkenyl mit 2 bis 5 C-Atomen, insbesondere für Alkyl, steht, die durch Halogen oder Alkoxy substituiert sein können, und

$R^2$ für Alkyl mit 1 bis 4 C-Atomen, insbesondere für Alkenyl mit 2 bis 4 C-Atomen, insbesondere für Alkyl, die durch Halogen oder Alkoxyreste substituiert sein können, und

$R^3$ für Alkenyl mit 3 bis 4 C-Atomen steht, das in 2-Stellung eine Doppelbindung trägt und durch Methyl substituiert sein kann; insbesondere steht $R^3$ jedoch für Alkyl;

X steht für Sauerstoff oder Schwefel und Y und Z stehen unabhängig voneinander für Sauerstoff und Schwefel.

Mindestens einer der Reste $R^1$, $R^2$ und $R^3$ muss jedoch für einen in 2-Stellung ungesättigten Rest stehen, besonders bevorzugt ist der Allylrest.

Bevorzugt sind ausserdem Verbindungen, in denen sowohl Y als auch Z für Sauerstoff oder für Schwefel stehen und $R^1$, $R^2$ und $R^3$ zusätzlich zu den oben angegebenen Bedeutungen für Propargyl stehen.

Als besonders vorteilhaft als Synergisten zu verwendende ungesättigen organischen Phosphate der Formel (I) seien beispielsweise genannt:

Triallylphosphat
Tripropargylphosphat
Phosphorsäuredimethylallylester
Phosphorsäurediäthylallylester
Phosphorsäuredipropylallylester
Phosphorsäurediisopropylallylester
Phosphorsäuredibutylallylester
Phosphorsäuredichloräthylallylester
Phosphorsäuredibenzylallylester
Phosphorsäuremethyldiallylester
Phosphorsäureäthyldiallylester
Phosphorsäurepropyldiallylester
Phosphorsäureisopropyldiallylester
Phosphorsäurebutyldiallylester
Phosphorsäurechloräthyldiallylester
Phosphorsäureallyl-bis-2,3-dichlorpropylester
Phosphorsäureallyl-bis-2,3-dibrompropylester
Phosphorsäurediallyl-2,3-di-chlorpropylester
Phosphorsäurediallyl-2,3-di-brompropylester
Phosphorsäureallylmethyl-2,2-di-chlorvinylester
Phosphorsäureallyläthyl-2,2-di-chlorvinylester
Phosphorsäureallylpropyl-2,2-di-chlorvinylester
Phosphorsäureallylisopropyl-2,2-di-chlorvinylester
Phosphorsäureallylbutyl-2,2-di-chlorvinylester
Phosphorsäureallylisobutyl-2,2-di-chlorvinylester
Phosphorsäurediallyl-2,2-dichlorvinylester
Phosphorsäureallyl-bis-2,2-dichlorvinylester
O,O,O-Triallylthiophosphat
O,O,O-Tripropargylthiophosphat
Thiophosphatsäure-O-allyl-O,O-dimethylester
Thiophosphorsäure-O-allyl-O,O-diäthylester
Thiophosphorsäure-O-allyl-O,O-dipropylester
Thiophosphorsäure-O-allyl-O,O-dipropylester
Thiophosphorsäure-O-allyl-O,O-diisopropylester
Thiophosphorsäure-O-allyl-O,O-dibutylester
Thiophosphorsäure-O-allyl-O,O-di-2-chloräthylester
Thiophosphorsäure-O,O-diallyl-O-methylester
Thiophosphorsäure-O,O-diallyl-O-äthylester
Thiophosphorsäure-O,O-diallyl-O-propylester
Thiophosphorsäure-O,O-diallyl-O-isopropylester
Thiophosphorsäure-O,O-diallyl-dibutylester
Thiophosphorsäure-O,O-diallyl-O-di-2-chloräthylester
Phosphorsäuremethyldipropargylester
Phosphorsäureäthyldipropargylester
Phosphorsäurepropyldipropargylester
Phosphorsäureisopropyldipropargylester
Phosphorsäurebutyldipropargylester
Phosphorsäureisobutyldipropargylester
Phosphorsäureamyldipropargylester
Phosphorsäureisoamyldipropargylester
Phosphorsäurehexyldipropargylester
Phosphorsäure-2-äthylhexyldipropargylester

Zu den als Mischkomponenten zu verwendenden Carbamaten der Formel (II) gehören:

2-Methylphenyl-, 2-Äthylphenyl-, 2-n-Propylphenyl-, 2-Methoxyphenyl-, 2-Äthoxyphenyl-, 2-n- oder -iso-Propoxyphenyl-, 4-Methyl-phenyl-, 4-Äthylphenyl-, 4-n-Propylphenyl-, 4-Methoxyphenyl-, 4-Äthoxyphenyl-, 4-n-Propoxyphenyl-, 2-Allalphenyl-, 2-(1-Methylallyl)-phenyl, 3-iso-Propyl-4-methoxyphenyl-, 3,4,5-Trimethylphenyl-,

2,3-Dihydro-2,2-dimethylbenzufuran(7)-yl-, 2-[1,3-Dioxolan(2)yl-phenyl]-, 2,2-Dimethyl-1,3-benzodioxol(4)yl-, 2,2-Dimethyl- bzw. 1-Methyl-2,3-dihydro-benzofuran(4)yl-N-methyl-carbamat, die entsprechenden -N-methyl-N-acetyl-, -N-methyl-N-trifluormethylthio-, -N-methyl-N-dichlormonofluormethylthio- bzw. -N-methyl-N-dimethylaminothio-carbamate.

Diese Verbindungen, ihre Herstellung und ihre Verwendung sind bekannt (vergleiche z.B. US-Patentschriften 3 009 855; 2 903 478 und 3 111 539).

Wie bereits erwähnt, zeigen die neuen Wirkstoffkombinationen der erfindungsgemäss verwendbaren ungesättigten organischen Phosphate mit Carbamaten eine hervorragende Wirkungssteigerung gegenüber den Einzelwirkstoffen bzw. gegenüber deren Summe.

Die Gewichtsverhältnisse der Wirkstoffgruppen können dabei in relativ grossen Bereichen schwanken. Im allgemeinen werden die als Synergisten verwendeten phosphorhaltigen Verbindungen mit den übrigen Wirkstoffen im Verhältnis 0,1:10 bis 10:0,1 eingesetzt. Besonders geeignet haben sich jedoch Mischungsverhältnisse von 0,5:1,0 bis 3,0:1,0 erwiesen. Die erfindungsgemässen Wirkstoffkombinationen bewirken nicht nur eine schnelle knock-down-Wirkung, sondern bewirken auch die nachhaltige Abtötung der tierischen Schädlinge, insbesondere von Insekten und Milben, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam.

Zu den oben erwähnten Schädlingen gehören:

Aus der Ordnung der Isopoda z.B. Oniscuc asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blatella germanica, Aceta demoesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.,

Aus der Ordnung der Anoplura z.B. Phyllocera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisda tabaci, Trialeurodes vaporariurum, Aphis gossypii, Brevicornyne brassicae, Cryptomyzus ribis, Doralis fabae, Doralis pomi, Eriosoma lanigerum, Hyalopterus arundinis, Macorsiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidielle auroantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neutria, Euproctis chrysorrhoea, Lymantria spp. Bucculatrix thurberiella, Phillocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris sp., Chilo spp., Pyrausta nubilalis, Ephestia kuehniella, Calleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postuca, Dermestes spp., Trogoderma spp., Anthrenus spp., Attagenus spp., Lyctus spp., Meligethes aeneus, Ptinus spp., Niptus hololeucus, Gibbium psylloides Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., C terebra spp., Gastrophilus spp., Hypobosca spp., Stomocxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Die Wirkstoffkombinationen können in die üblichen Formulierungen überführt werden, wie Lösungen, Emulsionen, Spritzpulver, Suspensionen, Pulver, Stäubermittel, Schäume, Pasten, lösliche Pulver, Granulate, Aerosole, Suspensions-Emulsionskonzentrate. Saatgutpulver, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Wärmenebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Parafine, z.B. Erdölfraktionen, Alkohole, wie Butanol oder Glykol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerde, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxy-äthylen-Fettalkohol-Äther, z.B. Alkylaryl -polyglykol-äther, Alkylsulfonate, Alkylsulfate, Arylsulfonate sowie Eiweisshydrolysate; als Dispergiermittel: z.B. Lignin, Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90%.

Die Anwendung der erfindungsgemässen Wirkstoffkombinationen erfolgt in Form ihrer handelsüblichen Formulierung und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsform kann von 0,0000001 bis zu 100 Gew.-% Wirkstoff, vorzugsweise zwischen 0,01 und 10 Gew.-% liegen.

Die Anwendung geschieht in einer den Anwendungsformen angepassten üblichen Weise.

Bei der Anwendung gegen Hygiene- und Vorratsschädlinge zeichnen sich die Wirkstoffkombinationen durch eine hervorragende Residualwirkung auf Holz und Ton sowie durch eine gute Alkalistabilität auf gekälkten Unterlagen aus.

Beispiel

$LT_{100}$-Test

Testtiere: Phophorsäureesterresistente Musca domestica (Stamm Weymanns)
Lösungsmittel: Aceton

Von den Wirkstoffen, Synergisten und Gemischen aus Wirkstoffen und Synergisten werden Lösungen hergestellt und 2,5 ml davon in Petrischalen auf Filterpapierscheiben von 9,5 cm Durchmesser pipetiert. Das Filterpapier saugt die Lösungen auf. Die Petrischalen bleiben so lange offen stehen, bis das Lösungsmittel vollständig verdunstet ist. Anschliessend gibt man 25 Testtiere in die Petrischalen und bedeckt sie mit einem Glasdeckel.

Der Zustand der Testtiere wird bis zu 6 Stunden laufend kontrolliert. Es wird diejenige Zeit ermittelt, die für eine 100%ige knock-down-Wirkung erforderlich ist. Wird die $LT_{100}$ nach 6 Stunden nicht erreicht, wird der %-Satz der knock-down gegangenen Testtieren festgestellt.

Konzentrationen der Wirkstoffe, Synergisten und Gemische und ihre Wirkungen gehen aus der nachfolgenden Tabelle I hervor.

Tabelle
LT 100-Test mit phosphorsäureester-resistenten Musca domestica (Stamm Weymanns)

| Wirkstoffe bzw. ( ) Kennbuchstabe | Synergist-Nr. | Konzentration in % | LT 100 nach Minuten |
|---|---|---|---|
| 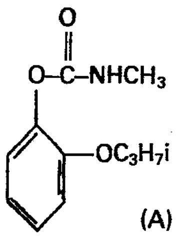 (A) | | 1,0 | 360′ = 0% |
| 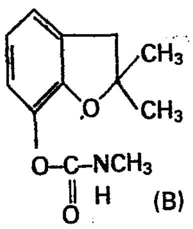 (B) | | 1,0 | 360′ = 20% |
| 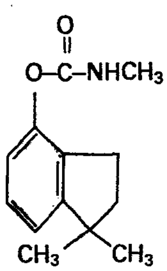 | | 1,0 | 360′ = 0% |
| 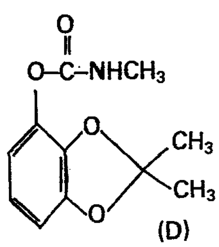 (D) | | 1,0 | 360′ = 10% |
| 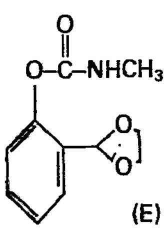 (E) | | 1,0 | 360′ = 10% |
| 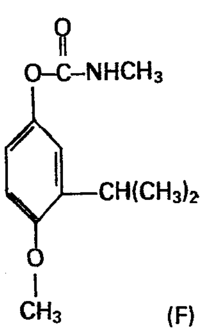 (F) | | 1,0 | 360′ = 0% |

| | | |
|---|---|---|
| 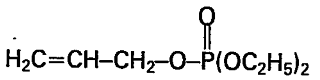 (1) | 1,0 | 360′ = 40% |
| 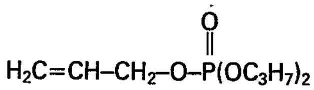 (2) | 0,2 | 360′ = 60% |
| 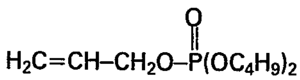 (3) | 1,0 | 360′ = 0% |
| 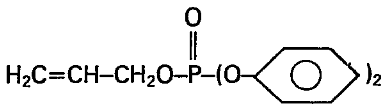 (4) | 1,0 | 360′ = 0% |
| 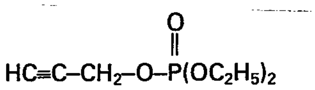 (5) | 1,0 | 360′ = 45% |
| 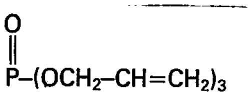 (6) | 1,0 | 360′ = 0% |
| 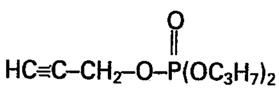 (7) | 1,0 | |
| 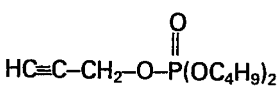 (8) | 1,0 | |
| 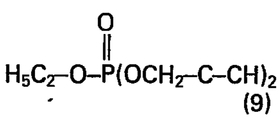 (9) | 1,0 | |

| Kennbuchstabe des Wirkstoffs | + | Synergist-Nr. | Konzentration Wirkstoff in % | | Konzentration Synergist in % | LT 100 nach Minuten |
|---|---|---|---|---|---|---|
| A | + | 1 | 0,2 | + | 0,2 | 105′ |
| A | + | 2 | 0,2 | + | 0,2 | 00′ |
| A | + | 3 | 0,2 | + | 0,2 | 180′ |
| A | + | 5 | 0,04 | + | 0,04 | 90′ |
| A | + | 5 | 0,008 | + | 0,008 | 150′ |
| A | + | 5 | 0,008 | + | 0,016 | 120′ |
| A | + | 5 | 0,008 | + | 0,04 | 90′ |
| A | + | 6 | 1,0 | + | 1,0 | 75′ |
| A | + | 7 | 0,04 | + | 0,04 | 75′ |
| A | + | 8 | 1,0 | + | 1,0 | 120′ |
| A | + | 9 | 0,008 | + | 0,008 | 120′ |
| B | + | 1 | 0,04 | + | 0,04 | 180′ |
| B | + | 9 | 0,008 | + | 0,008 | 105′ |
| B | + | 7 | 0,04 | + | 0,04 | 75′ |
| B | + | 8 | 0,2 | + | 0,2 | 210′ |
| C | + | 1 | 1,0 | + | 1,0 | 360′ |
| D | + | 1 | 0,04 | + | 0,04 | 360′ = 90% |
| E | + | 1 | 0,2 | + | 0,2 | 180′ |
| F | + | 1 | 1,0 | + | 1,0 | 150′ |

Herstellung der Synergisten:

Phosphorsäureäthyl-bis-propargylester (Nr. 9)

1 Mol Phosphorsäureäthylesterdichlorid und 2g Phenothiazin werden in 350ml Toluol gelöst und bei 10–20° C mit einem Gemisch aus 2,4Mol Pyridin und 2 Mol Propargylalkohol versetzt. Man rührt 1 Stunde bei 20–30° C und 1 Stunde bei 60° C nach und filtriert vom ausgeschiedenen Hydrochlorid ab. Das Salz wird in wenig Wasser gelöst und die Lösung mit zweimal 100 ml Methylenchlorid extrahiert.

Vom zweiphasen Filtrat wird das Toluol abgezogen, der Rückstand wird in 500ml Methylenchlorid gelöst und mit der Methylenchloridphase der Salzextraktion versetzt. Man wäscht diese Lösung mehrfach mit gesättigter Natriumbicarbonatlösung und Wasser und trocknet mit Natriumsulfat. Das Methylenchlorid wird abgezogen und der Rückstand fraktioniert.

Kp: 99° C/0,03 torr

$n_D^{20}$: 1,4488

Phosphorsäureallyldimethylester

Analog vorstehendes Beispiel setzt man 1 Mol Phosphorsäuredimethylesterchlorid mit 1 Mol Allylalkohol um.

Kp: 73° C/2 torr

$n_D^{20}$: 1,4250

Phosphorsäurepropargyldimethylester

Analog setzt man 1 Mol Phosphorsäuredimethylesterchlorid mit 1 Mol Propargylalkohol um.

Kp: 71–72° C/0,2 torr

$n_D^{20}$: 1,4282

1 Mol dieser Verbindung wird in 100ml Alkohol gelöst. Bei 20–30° C gibt man langsam eine Lösung von 1 Mol KOH in 200ml Alkohol hinzu, durch Kühlung wird die Temperatur unter 40° C gehalten. Man saugt ab und fraktioniert nach Zugabe von 0,5g Phenothiazin.

Ausbeute: 140g

Kp: 85° C/0,5 torr

$n_D^{20}$: 1,4412

Allyldiphenylphosphat (Nr. 4)

Hergestellt aus Allylalkohol und Phosphorsäurediphenylesterchlorid in Gegenwart von Pyridin

Kp: 148–50° C/0,15mm

$n_D^{20}$: 1,5348

Triallylphosphat (Nr. 6)

Hergestellt aus $POCl_3$ und Allylalkohol in Toluol/Triäthylamin

Kp: 90° C/0,15mm

$n_D^{20}$: 1,4482

Allgemeine Vorschriften zur Herstellung von Allyldialkylphosphaten bzw. Propargyldialkylphosphaten

1 Mol Dialkylphosphit, 2 Mol $CCl_4$ und 1,05 Mol Allylalkohol bzw. Propargylalkohol werden bei 20–30° C tropfenweise mit 1,2 Mol Triäthylamin versetzt. Nach Abklingen der exothermen Reaktion lässt man 3Stdn. am Rückfluss kochen, filtriert vom Salz ab und fraktioniert.

Die folgende Tabelle II zeigt nach dem oben angegebenen Verfahren erhältliche Verbindungen:

Tabelle II

| Synergist-Nr. | Synergist | Siedepunkt | $n_D20$ |
|---|---|---|---|
| 1 | Allyldiäthylphosphat | 68° C/0,45 torr | 1,4216 |
| 2 | Allyldipropylphosphat | 75° C/0,2 torr | 1,4265 |
| 3 | Allyldi-n-butylphosphat | 102° C/0,06 torr | 1,4295 |
| 5 | Propargyldiäthylphosphat | 80° C/0,3 torr | 1,4320 |
| 7 | Propargyldipropylphosphat | 94° C/0,15 torr | 1,4332 |
| 8 | Propargyldibutylphosphat | 111° C/0,03 torr | 1,4364 |

**Patentansprüche**

1. Insektizide und akarizide Wirkstoff-Synergist-Kombinationen bestehend aus ungesättigten organischen Phosphaten der allgemeinen Formel I

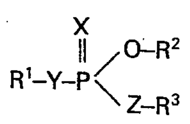

(I)

in welcher

$R^1$, $R^2$ und $R^3$ unabhängig voneinander für die Reste Alkyl, Alkenyl, welche gegebenenfalls durch Halogen oder Alkoxyreste substituiert sein können, oder Propargyl stehen, wobei mindestens einer der Reste für einen in 2-Stellung ungesättigten gegebenenfalls substituierten Alkenylrest oder für einen Propargylrest steht,

X für Sauerstoff oder Schwefel steht,

Y und Z unabhängig voneinander für Sauerstoff und Schwefel stehen

und Carbamaten im Gewichtsverhältnis zwischen 0,1:10 und 10:0,1.

2. Verfahren zur Bekämpfung von Insekten und Spinnentieren, dadurch gekennzeichnet, dass man eine Wirkstoffkombination gemäss Anspruch 1 auf Insekten und Spinnentiere und/oder ihren Lebensraum einwirken lässt.

3. Verwendung von Wirkstoffkombinationen gemäss Anspruch 1 zur Bekämpfung von Insekten und Spinnentieren.

4. Verfahren zur Herstellung von insektiziden und akariziden Mitteln, dadurch gekennzeichnet, dass man eine Wirkstoffkombination gemäss Anspruch 1 mit Streckmitteln und/oder oberflächenaktiven Mitteln vermischt.

**Claims**

1. Insecticidal and acaricidal active compound/synergistic agent combinations consisting of unsaturated organic phosphates of the general formula I

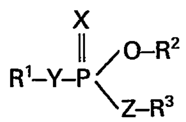

(I)

in which

$R^1$, $R^2$ and $R^3$ independently of one another represent the radicals alkyl or alkenyl, which can optionally be substituted by halogen or alkoxy radicals, or propargyl, at least one of the radicals representing an optionally substituted alkenyl radical which is unsaturated in the 2-position or a propargyl radical,

X represents oxygen or sulphur and

Y and Z independently of one another represent oxygen and sulphur and carbamates in a weight ratio between 0,1:10 and 10:0,1.

2. Process for combating insects and arachnidae, characterised in that an active compound combination according to Claim 1 is allowed to act on insects and arachnidae and/or their environment.

3. Use of active compound combinations according to Claim 1 for combating insects and arachnidae.

4. Process for the preparation of insecticidal and acaricidal agents, characterised in that an active compound combination according to Claim 1 is mixed with extenders and/or surface-active agents.

**Revendications**

1. Combination insecticides et acaricides de substances actives et d'agents synergiques, ces combinations étant constituées de phosphates organiques insaturés de formule générale I:

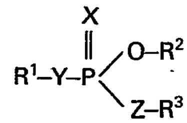

(I)

dans laquelle

$R^1$, $R^2$ et $R^3$ représentent chacun indépendamment l'un de l'autre un groupe alkyle ou un groupe alcényle pouvant éventuellement être substitué par un atome d'halogène ou par un groupe alcoxy, ou encore un groupe propargyle, au moins un de ces radicaux représentant un groupe alcényle insaturé en position 2 et éventuellement substitué ou un groupe propargyle,

X représente un atome d'oxygène ou de soufre,

Y et Z représentent chacun indépendamment l'un de l'autre un atome d'oxygène ou de soufre,

ainsi que de carbamates dans le rapport pondéral entre 0,1:10 et 10:0,1.

2. Procédé en vue de combattre les insectes et les acariens, caractérisé en ce qu'on fait agir une combinaison de substances actives suivant la revendication 1 sur des insectes et des acariens et/ou leur biotope.

3. Utilisation de combinaison de substances actives suivant la revendication 1 pour combattre les insectes et les acariens.

4. Procédé de préparation d'agents insecticides et acaricides, caractérisé en ce qu'on mélange une combinaison de substances actives suivant la revendication 1 avec des diluants et/ou des agents tensioactifs.